**Europäisches Patentamt**

**European Patent Office**

**Office européen des brevets**

(19)

(11) Numéro de publication: **0 250 285 B1**

# (12) FASCICULE DE BREVET EUROPEEN

(45) Date de publication du fascicule du brevet:
24.01.90

(51) Int. Cl.⁴: **F16D 65/56**

(21) Numéro de dépôt: **87401194.3**

(22) Date de dépôt: **27.05.87**

(54) **Moteur de frein comportant un dispositif de réglage automatique réinitialisable.**

(30) Priorité: **18.06.86 FR 8608812**

(43) Date de publication de la demande:
**23.12.87 Bulletin 87/52**

(45) Mention de la délivrance du brevet:
**24.01.90 Bulletin 90/4**

(84) Etats contractants désignés:
**DE ES GB IT**

(56) Documents cités:
**EP-A- 0 154 398**
**EP-A- 0 163 566**
**DE-A- 2 131 053**

(73) Titulaire: **BENDIX France, 126, rue de Stalingrad, F-93700 Drancy(FR)**

(72) Inventeur: **Fabbro, Edgard, 32, rue Ernest André, F-78110 Le Vesinet(FR)**
Inventeur: **Pressaco, Pierre, 45, rue Emile Zola, bât C, F-93120 La Courneuve(FR)**

(74) Mandataire: **Lejet, Christian et al, BENDIX FRANCE Division Technique Service Brevets Bendix Europe 126 rue de Stalingrad, F-93700 Drancy(FR)**

**Description**

La présente invention concerne les moteurs de frein, notamment pour frein à disque de véhicule, du type comportant un piston de frein coulissant dans un alésage d'un corps et actionnable, pour déplacer un organe de friction, soit hydrauliquement, soit mécaniquement par une commande mécanique via un dispositif de rattrapage automatique du type à vis/écrou à pas réversible comportant un organe de réglage immobilisé en rotation, supporté par une paroi frontale du piston de frein adjacente à l'organe de friction et coopérant avec un organe de réglage rotatif sollicité en engagement de friction libérable contre un élément non rotatif de la commande mécanique, et des moyens actionnables manuellement de réinitialisation du dispositif de réglage automatique.

Un moteur de frein de ce type est décrit dans le document EP-A-0 163 566, au nom de la demanderesse. Dans le moteur de frein de ce document, les moyens de réinitialisation sont constitués par une tige de manoeuvre formant pignon cônique monteé dans le corps de frein et actionnable pour entraîner en rotation l'organe rotatif du dispositif de réglage automatique afin d'en effectuer le revissage sur l'organe de réglage immobilisé en rotation fixé par une de ses extrémités à la paroi frontale du piston de frein, dans un agencement relativement complexe et onéreux, nécessitant, pour l'aménagement des moyens de réinitialisation, une longueur axiale importante pour l'ensemble du moteur de frein, et pouvant induire des risques de faiblesse structurelle dans le corps de frein.

La présente invention a pour objet de proposer un moteur de frein du type considéré de configuration compacte, dans un agencement allégé et simplifié et à fiabilité accrue, et autorisant l'intégration de fonctions additionnelles.

Pour ce faire, selon une caractéristique de l'invention, l'organe de réglage immobilisé en rotation comporte une extrémité traversant à coulissement étanche la paroi frontale du piston de frein, des moyens d'accouplement en friction, opérant au moins lors de l'actionnement du moteur de frein, étant prévus entre le piston de frein et l'organe de réglage immobilisé en rotation pour immobiliser normalement ce dernier en rotation, ladite extrémité de l'organe de réglage immobilisé en rotation étant actionnable manuellement en rotation de l'extérieur pour effectuer la réinitialisation du dispositif de réglage automatique en faisant tourner autour de son axe l'organe de réglage normalement immobilisé en rotation en vainquant, si besoin est, les moyens d'accouplement en friction, et en le revissant donc dans l'organe de réglage rotatif maintenu, au repos, en engagement de friction avec l'élément non rotatif de la commande mécanique, et donc immobilisée alors en rotation.

Selon une autre caractéristique de l'invention, l'organe normalement immobilisé en rotation est sollicité dans la direction vers l'élément de friction en butée contre la paroi frontale du piston de frein.

Avec un tel agencement, la réinitialisation, pour remplacer un organe de friction usé par un organe de friction neuf, s'effectue au-travers de la paroi frontale du piston de frein sur l'organe normalement immobilisé en rotation, dans un agencement essentiellement intégré dans le piston de frein et ne nécessitant donc pas de modifications structurelles du corps de frein, sans intervention directe externe sur l'organe de réglage rotatif et son environnement d'accouplement en friction, qui constituent le sous-ensemble particulièrement délicat du moteur de frein, l'immobilisation en rotation, en fonctionnement, de l'organe de réglage immobilisé en rotation et son calage sur le piston de frein garantissant le fonctionnement fiable et précis, lors de la mise en oeuvre du frein, du dispositif de réglage automatique et la précision de ses jeux fonctionnels.

Selon une autre caractéristique de l'invention, le moteur de frein comporte en outre des moyens hydrauliques d'inhibition du dispositif de réglage automatique, constitués typiquement d'un piston inhibiteur monté à coulissement étanche dans l'élément non rotatif de la commande mécanique, coopérant sélectivement avec l'organe de réglage rotatif pour en empêcher la rotation lorsque la pression d'actionnement hydraulique du piston de frein dépasse une valeur déterminée.

D'autres caractéristiques et avantages de la présente invention ressortiront de la description suivante de modes de réalisation, donnés à titre illustratif mais nullement limitatif, faite en relation avec les dessins annexés, sur lesquels :

- la figure 1 est une vue en coupe longitudinale d'un premier mode de réalisation d'un moteur de frein selon l'invention ;

- la figure 2 est une vue en coupe transversale partielle suivant le plan de coupe II-II de la figure 1 ; et

- la figure 3 est une vue analogue à la figure 1 montrant un second mode de réalisation de l'invention.

Dans la description qui va suivre et sur les dessins, les éléments identiques ou analogues portent les mêmes chiffres de référence, éventuellement indicés.

Le moteur de frein représenté sur les figures comprend généralement un piston creux de frein, désigné généralement par la référence 1, monté à coulissement axial dans un alésage 2 d'un corps de frein 3, en l'occurence un étrier de frein à disque supporté à coulissement sur un support fixe (non représenté). Le piston 1 comporte une paroi frontale d'extrémité 4 faisant saillie hors de l'alésage 2 et destinée à coopérer, en engagement direct ou indirect, avec un organe de friction 5 pour plaquer ce dernier en engagement de friction sur un organe à freiner, en l'occurence un disque de frein 6. Dans les modes de réalisation représentés, le piston de frein 1 délimite, dans l'alésage 2, une chambre hydraulique 7 délimitée d'autre part par un piston poussoir 8 monté à coulissement axial étanche dans une portion arrière de diamètre réduit de l'alésage 2 et actionnable par un actionneur mécanique 9 assurant typiquement la fonction de frein de parking, l'accouplement mécanique entre le piston poussoir 8 et l'actionneur 9 empêchant la rotation du piston poussoir 8 dans le corps 3.

Dans un logement antérieur 10 du piston poussoir 8 est monté à coulissement étanche un piston inhibiteur 11 sollicité axialement vers l'avant par un ressort 12 prenant appui sur le fond du logement 10. Le logement 10 débouche, vers l'avant, par une portion d'alésage de diamètre intérieur agrandi se raccordant au logement 10 en formant un épaulement radial 13 et s'évasant vers l'avant pour constituer une surface intérieure cônique divergente 14 formant une surface d'accouplement en friction avec une surface cônique complémentaire 15 formée par une partie arrière de diamètre extérieur agrandi 16 d'un organe de réglage rotatif, constitué ici sous la forme d'un écrou 17, vissé, dans un engagement à pas réversible, sur l'extrémité arrière filetée d'un organe de réglage immobilisé en rotation, constitué ici sous la forme d'une vis 18 supportée, par son extrémité avant 19, dans la paroi frontale 4 du piston de frein 1.

L'organe de réglage rotatif 17 est sollicité en engagement de friction par sa face cônique 15 contre la face cônique 14 du piston poussoir 8 par un fort ressort de rappel 20 prenant appui antérieurement sur une cage 21 solidaire du corps 3 et postérieurement, via une butée axiale 22, sur la face antérieure de la partie d'extrémité de diamètre agrandi 16 de l'organe rotatif 17, le ressort 20 maintenant ainsi le piston poussoir 8 en configuration rétractée arrière en engagement avec l'actionneur mécanique 9. Un disque de blocage 23 est monté centralement, avec possibilité de rotation autour de son axe, dans une gorge d'un tèton antérieur 24 solidaire du piston inhibiteur 11, la face postérieure du disque 23 s'étendant au voisinage, axialement, de l'épaulement annulaire 13. Le disque 23 comporte localement des pattes 25 rabattues axialement vers l'avant et reçues avec jeu axial dans des logements correspondants 26 formés dans la face postéri=ure de l'organe rotatif 17.

Conformément à un aspect de l'invention, l'extrémité antérieure 19 de la vis 18 présente une partie principale de forme cylindrique traversant à coulissement étanchéifié par un joint 27 un alésage central traversant 28 formé dans la paroi frontale 4.

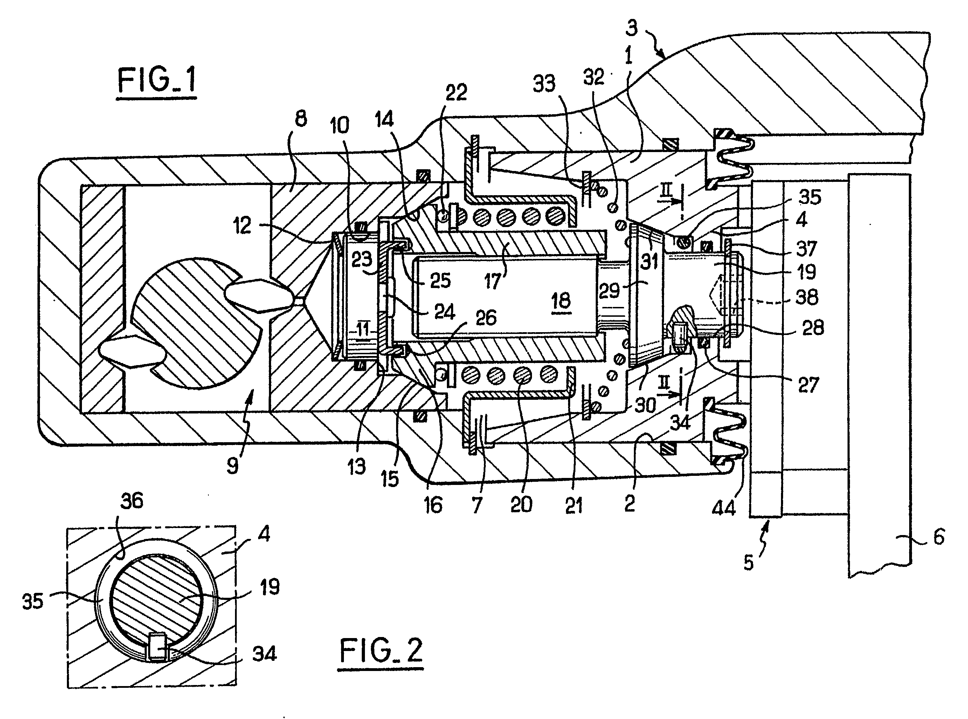

Dans le mode de réalisation de la figure 1, l'extrémité 19 se raccorde à la partie filetée de la vis 18 par une partie intermédiaire de diamètre extérieur élargi 29 comportant périphériquement une surface cônique convergeant vers l'avant 30 destinée à coopérer en engagement de friction et à coincement avec une surface cônique complémentaire 31 formée dans la paroi frontale 4 du piston 1. La surface 30 est sollicitée en engagement de friction avec la surface 31 par un ressort 32 prenant appui antérieurement sur la face postérieure de la portion intermédiaire 29 de la vis 18 et, postérieurement, sur une rondelle 33 solidaire du piston 1. En raison de la compacité du moteur de frein selon l'invention et de la conformation correspondante du ressort 32, en complément de l'engagement de friction entre les surfaces 30 et 31 sous l'effet du ressort 32, destiné à empêcher normalement la rotation de la vis 18 par rapport au piston 1, on prévoit avantageusement sur l'extrémité 19 une partie en saillie s'étendant radialement, par exemple un pion 34, disposé entre les extrémités en regard d'un ressort annulaire en C 35 coopérant en engagement de friction par sa périphérie avec la paroi interne 36 d'une portion d'alésage intermédiaire entre la surface cônique 31 et l'alésage 28 dans la paroi frontale 4. Dans le mode de réalisation de la figure 1, sur la portion extérieure de l'extrémité 19 de la vis 18 est monté un circlips 37 limitant le déplacement vers l'intérieur de la vis 18 par rapport au piston 1. Dans la face frontale de l'extrémité 19 de la vis 18 est formé un logement 38, par exemple du type à six pans creux, destiné à recevoir un outil d'actionnement comme on le verra plus avant.

Le fonctionnement du moteur de frein qui vient d'être décrit est le suivant : en fonctionnement hydraulique, la pression dans la chambre 7 provoque un déplacement vers l'avant, autorisé par les jeux fonctionnels du dispositif de réglage automatique, du piston 1 pour presser l'organe de friction 5 contre l'organe à freiner 6. Lorsqu'une usure intervient dans l'organe de friction 5, l'obtention d'un freinage correct nécessite un complément d'avance du piston 1 qui entraîne alors axialement vers l'avant, via la vis 18 maintenue bloquée axialement et en rotation dans la configuration représentée sur la figure 1 par les ressorts 32 et 35 et par la pression dans la chambre 7, l'écrou 17 à l'encontre du ressort 20, dégageant ainsi l'une de l'autre les faces de friction 14 et 15 et permettant donc, sous l'effet du ressort 20, à l'écrou 17 de se dévisser par rapport à la vis 18 pour revenir en engagement, par sa face 15 contre la face 14, le jeu résultant de l'usure de l'organe de friction 5 étant ainsi automatiquement rattrapé. Lors de cette phase de réglage automatique, correspondant à une pression d'actionnement inférieure à une valeur déterminée, le disque 23 peut tourner relativement au piston inhibiteur 11, en n'interdisant ainsi pas la rotation en vue du réglage de l'écrou 17. Si, par contre, la pression d'actionnement dépasse ladite valeur déterminée, la force résultante exercée sur le piston inhibiteur 11 devient alors suffisante pour repousser ce dernier vers l'arrière, a l'encontre du ressort 12, et plaquer ainsi en engagement de friction la face postérieure du disque 23 contre l'épaulement 13 en immobilisant donc en rotation le disque 23 et, partant, via les pattes 25 dans les logements 26 l'écrou 17, de sorte que le déplacement vers l'avant sus-mentionné, via la vis 18, de l'écrou 17 écartant l'une de l'autre les faces 14 et 15 ne peut se traduire, sous l'effet du ressort 20, par une rotation de l'écrou 17 bloqué en rotation par le disque 23, de façon à éviter ainsi un surréglage du moteur de frein.

Pour la réinitialisation du dispositif automatique, après enlèvement de l'organe de friction usé 5, un outil d'actionnement, par exemple une clé à pans coudée est introduite dans le logement 38 de sorte qu'un couple exercé sur la clé permet de faire tourner la vis 18 en forçant les accouplements à frictions entre les faces 30 et 31 et le ressort 35 et la paroi 36. L'écrou 17 demeurant immobilisé en rotation par engagement entre les faces 14 et 15 sous l'effet du ressort 20, la rotation de la vis 18 provoque le revissage de cette dernière dans l'écrou 17, son retrait étant accompagné, du fait de l'engagement entre le circlips 37 et la face antérieure adjacente de la paroi frontale 4 du piston 1, par un retrait de ce dernier vers la position initiale représentée sur la figure 1.

Pour l'actionnement mécanique du frein, une rotation de l'actionneur mécanique 9 provoque un déplacement vers l'avant du piston poussoir 8, transmis, via l'écrou 17 et la vis 18 au piston 1, en confirmant l'engagement entre les faces 14 et 15 d'une part et 30 et 31, d'autre part, pour appliquer similairement l'organe de friction 5 contre l'organe à freiner 6, aucun réglage ne s'effectuant lors des phases d'actionnement mécanique.

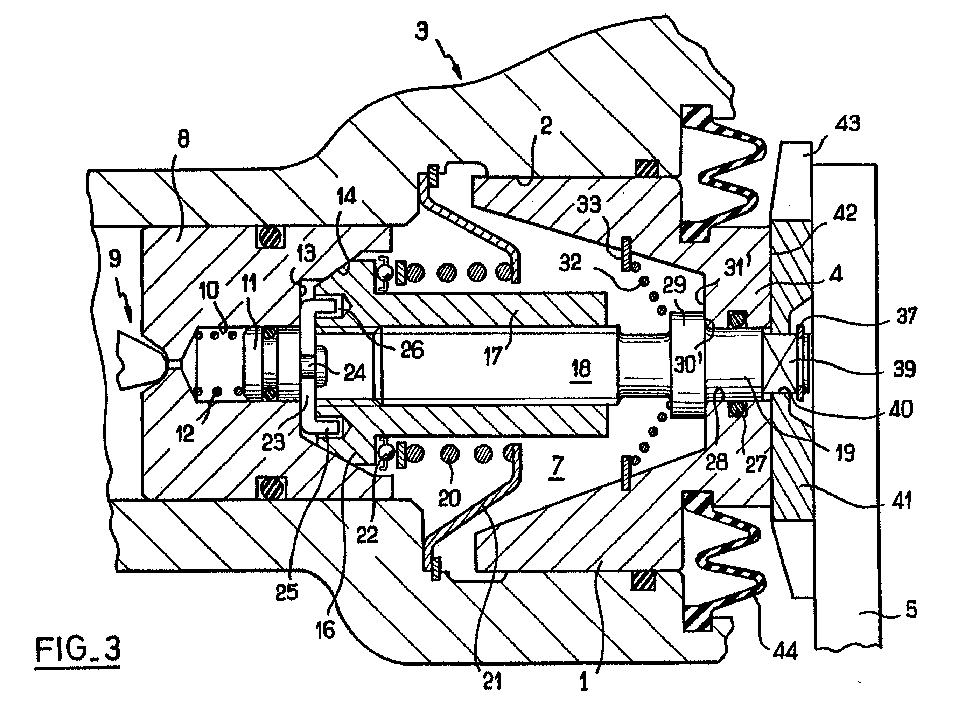

Le mode de réalisation représenté sur la figure 3 se distingue essentiellement de celui qui vient d'être décrit en relation avec les figures 1 et 2 par le mode d'immobilisation en rotation et d'actionnement en réinitialisation de la vis 18. Dans le mode de réalisation de la figure 3, la portion intermédiaire de diamètre élargie 29 se raccorde à l'extrémité cylindrique 19 par un épaulement annulaire 30' venant porter en appui de butée, sous l'effet du ressort 32, contre la face annulaire intérieure adjacente 31' de la paroi frontale avant 4 du piston 1. Par contre, l'extrémité 19 comporte ici une portion extérieure à section polygonale 39 sur laquelle est engagée, par un orifice central de section correspondante 40, un disque 41 interposé entre la face avant 42 de la paroi frontale 4 et l'organe de friction 5. Un circlips 37 monté sur l'extrémité 19 rend le disque 41 imperdable sur la vis 18. Le disque 41 est formé, à sa périphérie, avec des dents ou des échancrures 43 pour en permettre la rotation manuelle, par exemple par l'intermédiaire d'un tournevis. Le fonctionnement du mode de réalisation de la figure 3 est dans ses grandes lignes analogue à celui qui a été décrit en relation avec le mode de réalisation de la figure 1, si ce n'est que l'immobilisation en rotation de la vis 18 est ici assurée, lors de la mise en oeuvre du frein, par le coincement en contact de friction du disque 41 entre la face avant 42 du piston 1 et l'organe de friction 5, tant en mode d'actionnement hydraulique qu'en mode d'actionnement mécanique par l'actionneur 9. Par contre, pour la réinitialisation du dispositif de réglage automatique, on fait donc tourner, le frein étant au repos, le disque 41 via les échancrures 43, la rotation du disque 41 provoquant une rotation de la vis 18 se traduisant, comme précédemment, par un retrait simultané de la vis 18 et du piston 1 vers la position de repos initial représenté sur la figure 3. Le mode de réalisation de la figure 3 présente l'avantage particulier que le disque 41 protège de tout contact intempestif avec l'organe de friction 5 le soufflet de protection 44 traditionnellement interposé entre le piston 1 et le corps 3.

Quoique la présente invention ait été décrite en relation avec des modes de réalisation particuliers, elle ne s'en trouve pas limitée, mais est au contraire susceptible de modifications et de variantes qui apparaîtront à l'homme de l'art. En particulier, l'organe rotatif peut être réalisé sous la forme d'une vis présentant la tête d'extrémité 16 et coopérant avec un écrou ouvert vers l'arrière et se prolongeant vers l'avant pour former l'extrémité 19.

## Revendications

1. Moteur de frein, comportant un piston de frein (1) coulissant dans un alésage (2) d'un corps (3) et actionnable, pour déplacer un organe de friction (5), hydrauliquement et mécaniquement par une commande mécanique (9 ; 8) via un dispositif de réglage automatique du type à vis/écrou à pas réversible comportant un organe de réglage immobilisé en rotation (18) supporté par une paroi frontale (4) du piston de frein adjacente à l'organe de friction et coopérant avec un organe de réglage rotatif (17) sollicité (20) en engagement de friction libérable (14,15) contre un élément non rotatif (8) de la commande mécanique (9), et des moyens (38 ; 43) actionnables manuellement de réinitialisation du dispositif de réglage automatique, caractérisé en ce que l'organe de réglage immobilisé en rotation (18) comporte une extrémité (19) traversant à coulissement étanche la paroi frontale (4) du piston de frein (1), des moyens d'accouplements en friction (30,31 ; 34,35,36; 41,42,5), opérant au moins lors de l'actionnement du moteur de frein, étant prévu entre le piston de frein (1) et l'organe de réglage immobilisé en rotation (18) pour immobiliser ce dernier en rotation, l'extrémité (19) de l'organe de réglage immobilisé en rotation (18) étant actionnable en rotation manuellement de l'extérieur pour effectuer la réinitialisation du dispositif de réglage automatique.

2. Moteur de frein selon la revendication 1, caractérisé en ce que l'organe de réglage immobilisé en rotation (18) est sollicité (32) dans la direction vers l'élément de friction (5) en butée (30,31 ; 30', 31') contre la paroi frontale (4) du piston de frein (1).

3. Moteur de frein selon la revendication 1 ou la revendication 2, caractérisé en ce que les moyens d'accouplement à friction comprennent des surfaces coopérantes (30,31 ; 34,35,36 ; 41,42) solidaires respectivement de l'organe de réglage immobilisé en rotation (18) et de la paroi frontale (4) du piston de frein (1).

4. Moteur de frein selon la revendication 3, caractérisé en ce que les surfaces coopérantes (30,31 ; 30', 31') sont formées respectivement sur une portion antérieure (29) de l'organe de réglage immobilisé en rotation voisine de ladite extrémité (19) et dans la partie intérieure de la paroi frontale (4) du piston de frein (1).

5. Moteur de frein selon la revendication 3 ou la revendication 4, caractérisé en ce que les surfaces coopérantes sont formées respectivement sur la partie extérieure de la paroi frontale (4) du piston de frein (1) et sur un disque d'actionnement (41) couplé en rotation à l'extrémité (19) de l'organe de réglage immobilisé en rotation et interposé entre le piston de frein (1) et l'organe de friction (5).

6. Moteur de frein selon l'une des revendications précédentes, caractérisé en ce qu'il comporte des moyens hydrauliques (11,23) d'inhibition du dispositif de réglage automatique coopérant sélectivement avec l'organe de réglage rotatif (17) pour en empêcher la rotation lorsque la pression hydraulique d'actionnement du frein dépasse une valeur déterminée.

7. Moteur de frein selon la revendication 6, caractérisé en ce que les moyens d'inhibition comprennent un piston inhibiteur (11) monté à coulissement étanche dans l'élément non rotatif (8) de la commande mécanique (9).

8. Moteur de frein selon la revendication 7, caractérisé en ce que le piston inhibiteur (11) est monté dans un alésage (10) de l'élément non rotatif (8) coaxial à l'organe rotatif (17) et couplé à un élément de blocage (23) solidaire en rotation de l'organe de réglage rotatif (17) et susceptible de coopérer en engagement de friction contre une surface adjacente (13 ) de l'élément non rotatif (8) de la commande mécanique.

9. Moteur de frein selon la revendication 8, caractérisé en ce que l'élément de blocage (23) est supporté à rotation sur une extrémité (24) du piston inhibiteur (11) et comporte des parties en saillie (25) engagées à coulissement axial dans des logements correspondants (26) de l'organe de réglage rotatif (17).

10. Moteur de frein selon l'une des revendications 8 et 9, caractérisé en ce qu'il comprend un organe élastique (12) sollicitant le piston inhibiteur (11) dans la direction vers l'organe de réglage rotatif (17).

**Patentansprüche**

1. Bremsantrieb, mit einem Bremskolben (1), der in einer Bohrung (2) eines Körpers (3) gleitet und betätigt werden kann, um hydraulisch sowie mechanisch ein Reibungselement (5) durch eine mechanische Steuerung (9; 8) über eine Vorrichtung zur automatischen Nachstellung vom Typ mit Schraube/Schraubenmutter und umkehrbarer Steigung zu verschieben, welche ein drehfest gehaltenes Nachstellelement (18) umfaßt, das durch eine dem Reibungselement benachbarte Stirnwand (4) des Bremskolbens gestützt ist und mit einem drehbaren Nachstellelement (17) zusammenwirkt, das gegen ein drehfestes Element (8) der mechanischen Steuerung (9) in lösbaren Reibungseingriff (14, 15) beaufschlagt ist, sowie mit Mitteln (38; 43) zur Neuinitialisierung der Vorrichtung zur automatischen Nachstellung, die manuell betätigt werden können, dadurch gekennzeichnet, daß das drehfest festgehaltene Element (18) ein Endstück (19) umfaßt, das die Stirnwand (4) des Bremskolbens (1) gleitend sowie abgedichtet durchquert, wobei Mittel (30, 31; 34, 35, 36; 41, 42, 5) zur Reibungsankoppelung wenigstens bei der Betätigung des Bremsantriebs wirken, die zwischen dem Bremskolben (1) und dem drehfest festgehaltenen Nachstellelement (18) vorgesehen sind, um dieses drehfest festzuhalten, wobei das Endstück (19) des drehfest festgehaltenen Nachstellelementes (18) von außen manuell drehbar betätigt werden kann, um die Neuinitialisierung der Vorrichtung zur automatischen Nachstellung zu bewirken.

2. Bremsantrieb nach Anspruch 1, dadurch gekennzeichnet, daß das drehfest festgehaltene Nachstellelement (18) in Richtung zum Reibungselement (5) hin in Anschlag (30, 31; 30', 31') gegen die Stirnwand (4) des Bremskolbens (1) beaufschlagt (32) ist.

3. Bremsantrieb nach Anspruch 1 oder 2, dadurch gekennzeichnet, daß die Mittel zur Reibungsankoppelung zusammenwirkende Flächen (30, 31; 34, 35, 36; 41, 42) umfassen, die jeweils mit dem drehfest festgehaltenen Nachstellelement (18) und mit der Stirnwand (4) des Bremskolbens (1) fest verbunden sind.

4. Bremsantrieb nach Anspruch 3, dadurch gekennzeichnet, daß die zusammenwirkenden Flächen (30, 31; 30', 31') jeweils auf einem Vorderabschnitt (29) des drehfest festgehaltenen Nachstellelementes, das dem Endstück (19) benachbart ist, und in dem Innenteil der Stirnwand (4) des Bremskolbens (1) gebildet sind.

5. Bremsantrieb nach Anspruch 3 oder 4, dadurch gekennzeichnet, daß die zusammenwirkenden Flächen jeweils auf dem Außenteil der Stirnwand (4) des Bremskolbens (1) und auf einer Betätigungsscheibe (41), welche am Endstück (19) des drehfest festgehaltenen und zwischen dem Bremskolben (1) und dem Reibungselement (5) eingefügten Nachstellelementes angekoppelt ist, gebildet sind.

6. Bremsantrieb nach einem der vorstehenden Ansprüche, dadurch gekennzeichnet, daß er hydraulische Mittel (11, 23) zur Sperrung der automatischen Nachstellvorrichtung umfaßt, die mit dem drehbaren Nachstellelement (17) selektiv zusammenwirken, um dessen Rotation zu verhindern, wenn der hydraulische Druck zur Betätigung der Bremse einen bestimmten Wert überschreitet.

7. Bremsantrieb nach Anspruch 6, dadurch gekennzeichnet, daß die Sperrmittel einen Sperrkolben (11) umfassen, der in dem drehfesten Element (8) der mechanischen Steuerung (9) gleitend sowie abgedichtet gelagert ist.

8. Bremsantrieb nach Anspruch 7, dadurch gekennzeichnet, daß der Sperrkolben (11) in einer Bohrung (10) des drehfesten Elementes (8) angebracht ist, das zu dem drehbaren Element (17) koaxial ist und an ein Blockierelement (23) angekoppelt ist, welches mit dem drehbaren Nachstellelement (17) drehbar fest verbunden ist und gegen eine Fläche (13), die dem drehfesten Element (8) der mechanischen Steuerung benachbart ist, in Reibungseingriff zusammenwirken kann.

9. Bremsantrieb nach Anspruch 8, dadurch gekennzeichnet, daß das Blockierelement (23) an einem Ende (24) des Sperrkolbens (11) drehbar getragen ist und herausragende Teile (25) umfaßt, die in entsprechenden Aufnahmestellen (26) des drehbaren Nachstellelementes (17) in axialem Gleiteingriff stehen.

10. Bremsantrieb nach Anspruch 8 oder 9, dadurch gekennzeichnet, daß er ein elastisches Element (12) umfaßt, das den Sperrkolben (11) in Richtung zum drehbaren Nachstellelement (17) hin beaufschlagt.

**Claims**

1. Brake motor, comprising a brake piston (1) sliding in a bore (2) in a body (3) and actuable hydraulically and mechanically by a mechanical control (9; 8) to move a friction member (5), via an automatic adjustment device of the reversing thread nut/screw type comprising an adjustment member locked in rotation (18) carried by a front wall (4) of the brake piston adjacent to the friction member and interacting with a rotating adjustment member (17) pushed by a spring (20) in free frictional engagement (14; 15) against a non-rotating component (8) of the mechanical control (9), and means (38; 43) manually actuable for resetting the automatic adjustment device, characterized in that the adjustment member locked in rotation (18) comprises an end (19) passing sealingly slideably through the front wall (4) of the brake piston (1), means of frictional connection (30 31; 34, 35, 36; 41, 42, 5), working at least when the brake motor is in operation, being provided between the brake piston (1) and the adjustment member locked in rotation (18) to lock this latter in rotation, the end (19) of the adjustment member locked in rotation (18) being actuable manually in rotation from the outside to carry out the resetting of the automatic adjustment device.

2. Brake motor according to Claim 1, characterized in that the adjustment member locked in rotation (18) is pushed (32) in the direction towards the friction component (5) bearing (30, 31; 30', 31') against the front wall (4) of the brake piston (1).

3. Brake motor according to Claim 1 or Claim 2, characterized in that the means of frictional engagement comprise interacting surfaces (30, 31; 34, 35, 36; 41, 42) integral respectively with the adjustment member locked in rotation (18) and the front Hall (4) of the brake piston (1).

4. Brake motor according to Claim 3, characterized in that the interacting surfaces (30, 31; 30', 31') are formed respectively on a front part (29) of the adjustment member locked in rotation near the said end (19) and in the part of the front wall (4) of the brake piston (1).

5. Brake motor according to Claim 3 or Claim 4, characterized in that the interacting surfaces are formed respectively on the outer part of the front wall (4) of the brake piston (1) and on an actuating disc (41) connected in rotation to the end (19) of the adjustment device locked in rotation and inserted between the brake piston (1) and the friction member (5).

6. Brake motor according to any of the preceding claims, characterized in that it comprises hydraulic means (11, 23) of inhibiting the automatic adjustment device interacting selectively with the rotating adjustment member (17) to prevent rotation thereof when the hydraulic operating pressure of the brake exceeds a preset value.

7. Brake motor according to Claim 6, characterized in that the inhibiting means comprise an inhibiting piston (11) sealingly slideably mounted in the non-rotating component of the mechanical control (9).

8. Brake motor according to Claim 7, characterized in that the inhibiting piston (11) is mounted in a bore (10) of the non-rotating component (8) coaxial with the rotating member (17) and connected to a locking component (23) integral in rotation with the rotating adjustment member (17) and able to interact in frictional engagement against an adjacent surface (13) of the non-rotating component (8) of the mechanical control.

9. Brake motor according to Claim 8, characterized in that the locking component (23) is carried in rotation on an end (24) of the inhibiting piston (11) and comprises projecting lugs (25) engaged to slide axially in corresponding recesses (26) of the rotating adjustment member (17).

10. Brake motor according to any of Claims 8 and 9, characterized in that it comprises a resilient member (12) pushing the inhibiting piston (11) in the direction towards the rotating adjustment member (17).

FIG_1

FIG_2

FIG. 3

EP 0 250 285 B1